# EUROPÄISCHE PATENTSCHRIFT

(11) **EP 3 645 189 B1**
(45) Veröffentlichungstag und Bekanntmachung des Hinweises auf die Patenterteilung: **07.07.2021**
(21) Anmeldenummer: 18725490.9
(22) Anmeldetag: 16.05.2018
(51) Int. Cl.: B21K 25/00, B21D 39/03, B21J 5/06, F16B 25/10, B21D 28/24

(54) **VERFAHREN ZUR HERSTELLUNG EINES STAHLBAUTEILVERBUNDS SOWIE STAHLBAUTEILVERBUND**
METHOD FOR PRODUCING A STEEL COMPONENT ASSEMBLY AND STEEL COMPONENT ASSEMBLY
PROCÉDÉ DE FABRICATION D'UNE PIÈCE COMPOSITE EN ACIER AINSI QUE PIÈCE COMPOSITE EN ACIER

(30) Priorität: 28.06.2017 DE 102017210864
(43) Veröffentlichungstag der Anmeldung: 06.05.2020
(73) Patentinhaber: Bayerische Motoren Werke Aktiengesellschaft, 80809 München (DE)
(72) Erfinder: EBERHARDT, Florian, 94508 Schöllnach (DE); KOPP, Christine Maria, 81927 München (DE); SCHMIDT, Uwe, 80995 Muenchen (DE); SPÖRER, Josef, 85405 Nandlstadt (DE); ZEHENTBAUER, Siegfried Georg, 84144 Geisenhausen (DE)
(86) Internationale Anmeldenummer: PCT/EP2018/062744
(87) Internationale Veröffentlichungsnummer: WO 2019/001839

(56) Entgegenhaltungen:
- DE-B3-102011 018 748
- JP-A- 2015 044 228
- US-A1- 2013 273 312

## Beschreibung

Die Erfindung betrifft ein Verfahren zur Herstellung eines Stahlbauteilverbunds sowie einen Stahlbauteilverbund.

Aus der WO 2016/096470 A1 ist ein pressgehärtetes Blechbauteil mit wenigstens einer Sollbruchstelle bekannt. Bei der Sollbruchstelle handelt es sich um einen überhärteten Bauteilbereich, welcher dazu vorgesehen ist, bei einer Crashbelastung durch ein Brechen Energie aufzunehmen. Hierdurch kann Kollisionsenergie gezielt in andere Bauteile umgelenkt werden. Dabei kann das pressgehärtete Blechbauteil in einem Bauteilverbund mit weiteren Bauteilen zusammengefügt sein.

Aus der JP 2015 044228 A ist das Einpressen eines Stahleinpresselements in ein Aluminiumbauteil bekannt.

Aufgabe der vorliegenden Erfindung ist es, ein Verfahren zur Herstellung eines Stahlbauteilverbunds sowie einen Stahlbauteilverbund zu schaffen, welche besonders einfach und besonders schnell herstellbar sind.

Diese Aufgabe wird erfindungsgemäß durch ein Verfahren zur Herstellung eines Stahlbauteilverbunds sowie durch einen Stahlbauteilverbund mit den Merkmalen der unabhängigen Patentansprüche gelöst. Vorteilhafte Ausführungen der Erfindung sind Gegenstand der abhängigen Patentansprüche und der Beschreibung.

Zur Schaffung eines Verfahrens zur Herstellung eines Stahlbauteilverbunds, mittels welchem der Stahlbauteilverbund besonders einfach und besonders schnell herstellbar ist, wird ein Stahlbauteil mit einer Sollbruchstelle versehen und die Sollbruchstelle des Stahlbauteils mittels eines Einpresselements zu einer Öffnung gestanzt. Anschließend wird das Einpresselement in die Öffnung des Stahlbauteils eingepresst und zumindest in Überdeckung mit dem Einpresselement ein Bauteil mittels eines flächig aufgetragenen Klebstoffs an das Stahlbauteil angeklebt. Danach wird mittels eines Fließbohrelements ein Fließloch durch das Einpresselement, das Stahlbauteil und das Bauteil hindurchgeschmolzen. Mit anderen Worten wird das Stahlbauteil, bei welchem es sich insbesondere um ein pressgehärtetes Stahlbauteil für ein Kraftfahrzeug handelt, während eines Herstellungsprozesses des pressgehärteten Stahlbauteils mit der Sollbruchstelle versehen. Anschließend wird das Einpresselement derart an die Sollbruchstelle des Stahlbauteils herangeführt, dass mittels des Einpresselements Druck auf die Sollbruchstelle ausgeübt werden kann und hierdurch die Sollbruchstelle zu der Öffnung gestanzt wird. Durch zumindest einseitige Druckausübung auf das Einpresselement senkrecht zu einer Erstreckungsebene des Stahlbauteils wird das Einpresselement in die Öffnung des Stahlbauteils eingepresst, sodass die Öffnung insbesondere mit dem Einpresselement gefüllt ist. Anschließend wird der Klebstoff flächig auf das Stahlbauteil und/oder das Bauteil aufgetragen, insbesondere in einem Bereich des Einpresselements, und das Stahlbauteil an das Bauteil anliegend angeordnet. Dabei liegt das Stahlbauteil zumindest in dem Bereich, in welchem das Einpresselement angeordnet ist, in Überdeckung mit dem Bauteil vor. Mittels des Fließbohrelements, bei welchem es sich insbesondere um eine Fließlochschraube handeln kann, wird das Fließloch unter Einwirkung von Druck und/oder Reibung durch das Einpresselement, das Stahlbauteil und das Bauteil hindurchgeschmolzen. Insbesondere wird das Fließloch in der Öffnung durch das Stahlbauteil hindurchgeschmolzen. Beispielsweise ist in dem Fließloch das Fließbohrelement angeordnet. Durch das Einpresselement kann verhindert werden, dass der Klebstoff aufgrund einer Wärmeentwicklung beim Schmelzen des Fließlochs das Fließloch verschmutzt, da beim Schmelzen des Fließlochs das Einpresselement das Fließloch abdichtet. Aufgrund der Sollbruchstelle des Stahlbauteils kann die Öffnung direkt mit dem Einpresselement in das Stahlbauteil gestanzt werden, sodass kein zusätzlicher Prozessschritt zum Einbringen der Öffnung in das Stahlbauteil wie beispielsweise Laserschneiden oder Stanzen vor dem Einbringen des Einpresselements nötig ist.

In diesem Zusammenhang hat es sich als vorteilhaft gezeigt, wenn das Stahlbauteil während einer Härtung mit der Sollbruchstelle versehen wird. Das bedeutet, dass die Sollbruchstelle während eines Härtevorgangs des pressgehärteten Stahlbauteils in das Stahlbauteil eingebracht wird. Während des Härtevorgangs des pressgehärteten Stahls ist dieser weich und formbar, sodass die Sollbruchstelle mit besonders wenig Aufwand in das Stahlbauteil eingebracht werden kann.

In einer vorteilhaften Ausgestaltung der Erfindung ist vorgesehen, dass das Fließloch während eines Aushärtevorgangs des Klebstoffs mittels des Fließbohrelements geschaffen wird. Das bedeutet, dass das Fließloch durch das Einpresselement,das Stahlbauteil und das Bauteil hindurchgeschmolzen wird, wenn der Klebstoff nach seinem Auftragen noch in einem fließfähigen Zustand vorliegt. Mittels des Fließlochs, in welchem beispielsweise die Fließlochschraube angeordnet ist, können das Stahlbauteil und das Bauteil fest aneinander gehalten werden, sodass der Klebstoff während des Aushärtens das Stahlbauteil und das Bauteil in einem durch das Fließloch und die Fließlochschraube fixierten Zustand fixiert.

In einer weiteren vorteilhaften Ausgestaltung der Erfindung ist vorgesehen, dass als das Bauteil ein Aluminiumrahmen an das Stahlbauteil in Überdeckung mit dem Einpresselement geklebt wird. Bei dem Aluminiumrahmen kann es sich beispielsweise um einen Aluminiumgrundrahmen des Kraftfahrzeugs handeln. Mittels des Verfahrens kann der Aluminiumrahmen besonders fest und besonders positionsgenau an dem Stahlbauteil befestigt werden.

In einer vorteilhaften Ausgestaltung der Erfindung ist vorgesehen, dass die Sollbruchstelle durch Einbringung einer Perforation in das Stahlbauteil erzeugt wird. Dies bedeutet, dass das Stahlbauteil mit die Perforation bildenden Löchern versehen wird, welche einen definierten Bereich des Stahlbauteils abgrenzen, sodass dieser als die Sollbruchstelle besonders einfach von dem Einpresselement durchstanzt werden kann. Beispielsweise kann das Einbringen der Perforation während der Härtung des Stahlbauteils erfolgen. Während der Härtung ist die Perforation in das Stahlbauteil besonders einfach einbringbar, da das Stahlbauteil während der Härtung in einem besonders weichen Zustand vorliegt.

In einer alternativen vorteilhaften Ausgestaltung der Erfindung ist vorgesehen, dass die Sollbruchstelle durch eine lokale Materialverschmälerung des Stahlbauteils mittels eines Formelements erzeugt wird. Beispielsweise weist das Formelement eine Ausbuchtung auf, welche während eines Formprozesses oder während eines Härtungsprozesses des Stahlbauteils eine zumindest bereichsweise Materialverschmälerung des Stahlbauteils in dem definierten Bereich bewirkt. Beispielsweise kann das Formelement mit Druck auf das Stahlbauteil aufgebracht werden, sodass durch die Ausbuchtung des Formelements Material in dem definierten Bereich zur Erzeugung der lokalen Materialverschmälerung verdrängt wird. Wird die lokale Materialverschmälerung während eines Herstellprozesses des pressgehärteten Stahlbauteils erzeugt, so kann ein Verfahrensschritt zur Erzeugung der Öffnung eingespart werden, indem gleichzeitig mit Einbringen des Einpresselements die Sollbruchstelle zu der Öffnung gestanzt wird. Hierdurch kann vorteilhafterweise Zeit eingespart werden.

Alternativ kann die Sollbruchstelle durch eine lokale Überhitzung während eines Härtungsprozesses des pressgehärteten Stahlbauteils in dem definierten Bereich erzeugt werden.

Ein weiterer Aspekt der Erfindung betrifft einen Stahlbauteilverbund, mit einem Stahlbauteil, welches eine von einem Einpresselement durch Durchstanzen einer Sollbruchstelle erzeugte Öffnung aufweist. Darüber hinaus umfasst der Stahlbauteilverbund das Einpresselement, welches in die Öffnung des Stahlbauteils eingepresst ist. Überdies weist der Stahlbauteilverbund ein Bauteil auf, welches mittels Klebstoff zumindest in Überdeckung mit der Öffnung an dem Stahlbauteil befestigt ist, wobei der Stahlbauteilverbund eine Fließbohröffnung aufweist, welche sich durch das Einpresselement, das Stahlbauteil und das Bauteil in Überdeckung erstreckt. Vorteilhafterweise sind Einzelkomponenten des Stahlbauteilverbunds besonders fest miteinander verbunden, da das Stahlbauteil sowie das Bauteil miteinander sowohl über eine Klebstoffverbindung als auch über eine Fließlochverbindung miteinander verbunden sind.

Hierfür ist es in einer vorteilhaften Weiterbildung der Erfindung vorgesehen, dass in der Fließbohröffnung eine Fließlochschraube angeordnet ist, mittels welcher die Fließbohröffnung erzeugt worden ist. Das bedeutet, dass mittels der Fließlochschraube das Fließloch in der Öffnung durch das Einpresselement, das Stahlbauteil und das Bauteil hindurch geschmolzen worden ist und die Fließlochschraube in dem Fließloch angeordnet bleibt. Hierdurch sind das Stahlbauteil und das Bauteil, bei welchem es sich um einen Aluminiumgrundrahmen eines Kraftfahrzeugs handeln kann, besonders fest miteinander verbunden. Es handelt sich hierbei somit um einen besonders stabilen Stahlbauteilverbund.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar.

Die Erfindung wird nun anhand eines bevorzugten Ausführungsbeispiels sowie unter Bezugnahme auf die Zeichnungen näher erläutert. Es zeigen:
- Fig. 1: eine schematische Schnittansicht eines Stahlbauteils mit einer Sollbruchstelle;
- Fig. 2: eine schematische Schnittansicht des Stahlbauteils gemäß Fig. 1 mit der Sollbruchstelle sowie ein Einpresselement, welches beabstandet von dem Stahlbauteil angeordnet ist;
- Fig. 3: eine schematische Schnittansicht des Stahlbauteils gemäß Fig. 1 mit der Sollbruchstelle und dem Einpresselement, welches an dem Stahlbauteil anliegt;
- Fig. 4: eine schematische Schnittansicht des Stahlbauteils mit dem Einpresselement, welches in einer Öffnung des Stahlbauteils angeordnet ist;
- Fig. 5: eine schematische Schnittansicht des Stahlbauteils mit dem Einpresselement, welches in der Öffnung des Stahlbauteils eingepresst ist;
- Fig. 6: eine schematische Schnittansicht des Stahlbauteils mit dem eingepressten Einpresselement gemäß Fig. 5, an welche mittels eines Klebstoffs ein Bauteil angeklebt ist;
- Fig. 7: eine schematische Schnittansicht des Stahlbauteils mit dem in der Öffnung angeordneten Einpresselement, an welches das Bauteil mittels des Klebstoffs angeklebt ist und einer Fließlochschraube, wobei mittels der Fließlochschraube ein Fließloch durch das Einpresselement hindurchgeschmolzen worden ist;
- Fig. 8: eine schematische Schnittansicht des Stahlbauteils mit dem in der Öffnung angeordneten Einpresselement und dem mittels des Klebstoffs angeklebten Bauteil sowie mit der Fließlochschraube, mittels welcher ein Fließloch durch das Einpresselement, das Stahlbauteil und das Bauteil hindurchgeschmolzen worden ist.

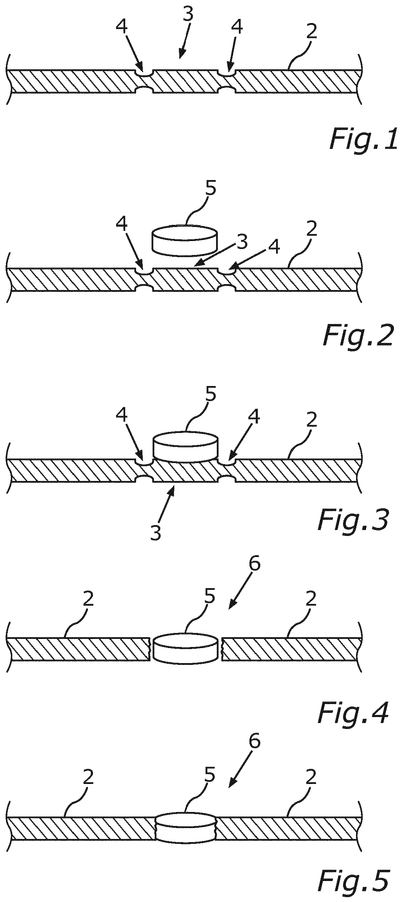

In einer Zusammenschau aus den Fig. 1 bis 8 ist ein Verfahren zur Herstellung eines Stahlbauteilverbunds 1 in einer schematischen Schnittansicht dargestellt. In Fig. 1 ist in einer schematischen Schnittansicht ein Stahlbauteil 2 mit einer Sollbruchstelle 3 gezeigt. Die Sollbruchstelle 3 wird durch eine lokale Materialverschmälerung 4 in einem definierten Bereich des Stahlbauteils 2 erzeugt. Bei dem Stahlbauteil 2 handelt es sich vorliegend um ein pressgehärtetes Stahlbauteil für ein Kraftfahrzeug. Das Stahlbauteil 2 wird vorliegend während einer Härtung der Sollbruchstelle 3 versehen. Alternativ kann die Sollbruchstelle 3 mittels einer Perforation des Stahlbauteils 2 erzeugt werden.

In Fig. 2 ist in einer schematischen Schnittansicht dargestellt, wie ein Einpresselement 5 im Bereich der Sollbruchstelle 3 beabstandet zum Stahlbauteil 2 angeordnet wird. In einer in Fig. 3 dargestellten schematischen Schnittansicht des Stahlbauteils 2 kann erkannt werden, wie das Einpresselement 5 an der Sollbruchstelle 3 an dem Stahlbauteil 2 angeordnet wird. Durch Kraftbeaufschlagung wird die Sollbruchstelle 3 des Stahlbauteils 2 mittels des Einpresselements 5 zu einer Öffnung 6 gestanzt. Wie in Fig. 4 dargestellt ist, ist das Einpresselement 5 nach dem Durchstanzen der Sollbruchstelle 3 des Stahlbauteils 2 in der Öffnung 6 des Stahlbauteils 2 angeordnet. Durch eine weitere Beaufschlagung des Einpresselements 5 mit einer Kraft wird das Einpresselement 5, wie in Fig. 5 in einer schematischen Schnittansicht dargestellt ist, in die Öffnung 6 des Stahlbauteils 2 eingepresst, sodass das Einpresselement 5 die Öffnung 6 vollständig ausfüllt.

Nach dem Einpressen des Einpresselements 5 in die Öffnung 6 des Stahlbauteils 2 wird zumindest in Überdeckung mit dem Einpresselement 5 ein Bauteil 7 mittels eines flächig aufgetragenen Klebstoffs 8 an das Stahlbauteil 2 angeklebt. Bei dem Bauteil 7 handelt es sich vorliegend um einen Aluminiumgrundrahmen des Kraftfahrzeugs. Der Klebstoff 8 kann auf das Bauteil 7 und/oder auf das Stahlbauteil 2 flächig aufgetragen werden. Während eines Aushärtevorgangs des Klebstoffs 8 wird ein Fließloch 9 mittels eines Fließbohrelements, vorliegend einer Fließlochschraube 10, durch das Einpresselement 5, das Stahlbauteil 2 und das Bauteil 7 hindurchgeschmolzen. Das Schmelzen erfolgt aufgrund von Reibung und einer daraus resultierenden Temperaturerhöhung im Bereich um die Fließlochschraube 10.

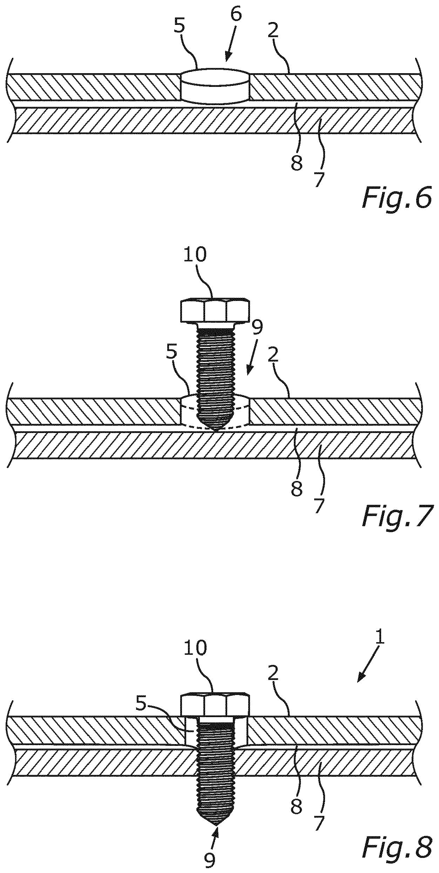

Wie in Fig. 7 dargestellt ist, wird die Fließlochschraube 10 zum Erzeugen des Fließlochs 9 an das Einpresselement 5 angelegt und als erstes durch dieses hindurchbewegt. Anschließend wird das Fließloch 9 durch den Klebstoff 8 und das Bauteil 7 hindurchgeschmolzen. Wie in Fig. 8 in einer schematischen Schnittansicht zu sehen ist, schmilzt das Einpresselement 5 infolge einer Wärmeentwicklung bei der Erzeugung des Fließlochs 9 und verändert hierdurch seine Form. In Fig. 8 ist dargestellt, wie das Einpresselement 5 in eine durch den Klebstoff 8 gebildete Schicht einschmilzt und so den Klebstoff 8 von der Fließlochschraube 10 abschirmt beziehungsweise abdichtet. Nach Erzeugen des Fließlochs 9 kann die Fließlochschraube 10 in dem Fließloch 9 weiterhin angeordnet bleiben oder nach Aushärten des Klebstoffs 8 und des infolge der Wärmeentwicklung geschmolzenen Einpresselements 5 aus dem Fließloch 9 entfernt werden.

Dabei liegt dem in Zusammenhang mit den Fig. 1 bis 8 beschriebenen Verfahren die Erkenntnis zugrunde, dass es aktuell nicht möglich ist, pressgehärtete Stahlbauteile mittels der Fließlochschraube 10 und einer dazwischenliegenden Kleberschicht zu fügen, ohne dass der Klebstoff 8 durch die Wärmeentwicklung nahe der Fließlochschraube 10 den Bereich um das Fließloch 9 am pressgehärteten Stahlbauteil 2 beziehungsweise am Bauteil 7 verschmutzt. Abhilfe wird mit dem Einpresselement 5 geschaffen, indem es diesen Bereich abdichtet. Das Einpresselement 5 soll eine im Vergleich zum pressgehärteten Stahlbauteil 2 relativ geringe Festigkeit aufweisen, was dazu führt, dass ein Einbringen des Einpresselements 5 in das Stahlbauteil 2 ohne eine Durchgangsbohrung momentan nicht möglich ist. Problematisch ist, dass das Einpresselement 5 weicher ist als das Stahlbauteil 2, dieses allerdings durchstoßen soll. Da ein Durchstoßen beziehungsweise ein Durchstanzen des Stahlbauteils 2 mittels des im Vergleich zum Stahlbauteil 2 weicheren Einpresselements 5 momentan nicht ohne Durchgangsbohrung möglich ist, ist ein zusätzlicher Prozessschritt, welcher mit zusätzlichen Kosten verbunden ist, erforderlich.

Um diesen zusätzlichen Prozessschritt zu vermeiden, wird der Stahlbauteilverbund 1, wie im Zusammenhang mit dem in den Fig. 1 bis 8 beschriebenen Verfahren erläutert, hergestellt. Ähnlich einem Verschluss einer Getränkedose beziehungsweise einer SIM-Karte soll während des Herstellungsprozesses des Stahlbauteils 2 die Sollbruchstelle 3 in Form der später zu erzeugenden Öffnung 6 eingebracht werden. Diese Sollbruchstelle 3 entsteht als grabenförmige Vertiefung im Stahlbauteil 2 durch eine Kontur auf einer Werkzeughälfte, welche sich beim Herstellungsprozess des pressgehärteten Stahlbauteils 2 in einen Werkstoff des Stahlbauteils 2 drückt. Dieses Eindrücken erfordert nur wenig Kraft, da das Stahlbauteil 2 durch eine Erhitzung im Herstellungsprozess nahezu teigig vorliegt. Hierbei entsteht kein Span oder Abfall, welcher abgeführt werden müsste. Vorteilhafterweise kann somit der zusätzliche Prozessschritt, bei welchem es sich beispielsweise um ein Laserschneiden beziehungsweise Stanzen vor einem Einbringen des Einpresselements 5 handeln würde, eingespart werden.

### Bezugszeichenliste

- 1: Stahlbauteilverbund
- 2: Stahlbauteil
- 3: Sollbruchstelle
- 4: Materialverschmälerung
- 5: Einpresselement
- 6: Öffnung
- 7: Bauteil
- 8: Klebstoff
- 9: Fließloch
- 10: Fließlochschraube

## Patentansprüche

1. Verfahren zur Herstellung eines Stahlbauteilverbunds (1), bei welchem
- ein Stahlbauteil (2) mit einer Sollbruchstelle (3) versehen wird,
- die Sollbruchstelle (3) des Stahlbauteils (2) mittels eines Einpresselements (5) zu einer Öffnung (6) durchstanzt wird,
- das Einpresselement (5) in die Öffnung (6) des Stahlbauteils (2) eingepresst wird,
- zumindest in Überdeckung mit dem Einpresselement (5) ein Bauteil (7) mittels eines flächig aufgetragenen Klebstoffs (8) an das Stahlbauteil (2) angeklebt wird, und
- mittels eines Fließbohrelements (10) ein Fließloch (9) durch das Einpresselement (5), das Stahlbauteil (2) und das Bauteil (7) hindurch geschmolzen wird.

2. Verfahren nach Anspruch 1,
**dadurch gekennzeichnet, dass**
das Stahlbauteil (2) während einer Härtung mit der Sollbruchstelle (3) versehen wird.

3. Verfahren nach Anspruch 1 oder 2,
**dadurch gekennzeichnet, dass**
das Fließloch (9) während eines Aushärtevorgangs des Klebstoffs (8) mittels des Fließbohrelements (10) geschaffen wird.

4. Verfahren nach einem der vorhergehenden Ansprüche,
**dadurch gekennzeichnet, dass**
als das Bauteil (7) ein Aluminiumrahmen an das Stahlbauteil (2) in Überdeckung mit dem Einpresselement (5) geklebt wird.

5. Verfahren nach einem der vorhergehenden Ansprüche,
**dadurch gekennzeichnet, dass**
die Sollbruchstelle (3) durch Einbringen einer Perforation in das Stahlbauteil (2) erzeugt wird.

6. Verfahren nach einem der Ansprüche 1 bis 4,
**dadurch gekennzeichnet, dass**
die Sollbruchstelle (3) durch eine lokale Materialverschmälerung (4) des Stahlbauteils (2) mittels eines Formelements erzeugt wird.

7. Stahlbauteilverbund (1), mit einem Stahlbauteil (2), welches eine von einem Einpresselement (5) durch Durchstanzen einer Sollbruchstelle (3) erzeugte Öffnung (6) aufweist, mit dem Einpresselement (5), welches in der Öffnung (6) des Stahlbauteils (2) eingepresst ist, mit einem Bauteil (7), welches mittels Klebstoff (8) zumindest in Überdeckung mit dem Einpresselement (5) an dem Stahlbauteil (2) befestigt ist, wobei der Stahlbauteilverbund (1) ein Fließloch (9) aufweist, welche sich durch das Einpresselement (5), das Stahlbauteil (2) und das Bauteil (7) in Überdeckung erstreckt.

8. Stahlbauteilverbund (1) nach Anspruch 7,
**dadurch gekennzeichnet, dass**
in dem Fließloch (9) eine Fließlochschraube (10) angeordnet ist, mittels welcher das Fließloch (9) erzeugt worden ist.

## Claims

1. Method for producing a steel component assembly (1), in which method
- a steel component (2) is provided with a predetermined breaking point (3);
- the predetermined breaking point (3) of the steel component (2) by means of a press-fit element (5) is punched so as to form an opening (6);
- the press-fit element (5) is pressed into the opening (6) of the steel component (2);
- a component (7) that overlaps at least the press-fit element (5) is adhesively bonded to the steel component (2) by means of an adhesive (8) that is applied in a planar manner; and
- a friction-drilling hole (9) is melted through the press-fit element (5), the steel component (2), and the component (7), by means of a friction-drilling element (10).

2. Method according to Claim 1, **characterized in that** the steel component (2) is provided with the predetermined breaking point (3) during hardening.

3. Method according to Claim 1 or 2, **characterized in that** the friction-drilling hole (9) is established by means of the friction-drilling element (10) during a curing procedure of the adhesive (8).

4. Method according to one of the preceding claims, **characterized in that** an aluminum frame as the component (7) is adhesively bonded to the steel component (2) so as to overlap the press-fit element (5).

5. Method according to one of the preceding claims, **characterized in that** the predetermined breaking point (3) is generated by incorporating a perforation in the steel component (2).

6. Method according to one of Claims 1 to 4, **characterized in that** the predetermined breaking point (3) is generated by way of a local material narrowing (4) of the steel component (2) by means of a forming element.

7. Steel component assembly (1) having a steel component (2) which has an opening (6) that by a press-fit element (5) is generated by punching a predetermined breaking point (3), having the press-fit element (5) which is pressed into the opening (6) of the steel component (2), having a component (7) which by means of adhesive (8) is fastened to the steel component (2) so as to overlap at least the press-fit element (5), wherein the steel component assembly (1) has a friction-drilling hole (9) which extends through the overlapping press-fit element (5), steel component (2), and component (7).

8. Steel component assembly (1) according to Claim 7, **characterized in that** a friction-drilling screw (10) by means of which the friction-drilling hole (9) has been generated is disposed in the friction-drilling hole (9).

## Revendications

1. Procédé de production d'un composite de composant en acier (1), procédé dans lequel
- un composant en acier (2) est pourvu d'un point de rupture (3),
- le point de rupture (3) du composant en acier (2) est perforé au moyen d'un élément d'enfoncement (5) pour former une ouverture (6),
- l'élément d'enfoncement (5) est enfoncé dans l'ouverture (6) du composant en acier (2),
- un composant (7) est collé sur le composant en acier (2) au moyen d'un adhésif (8) appliqué de manière sensiblement bidimensionnelle au moins par chevauchement avec l'élément d'enfoncement (5), et
- un trou d'écoulement (9) est ménagé par fusion à travers l'élément d'enfoncement (5), le composant en acier (2) et le composant (7) au moyen d'un élément de perçage par écoulement (10).

2. Procédé selon la revendication 1,
**caractérisé en ce que**
le composant en acier (2) est pourvu du point de rupture (3) pendant le durcissement.

3. Procédé selon la revendication 1 ou 2,
**caractérisé en ce que**
le trou d'écoulement (9) est ménagé pendant un processus de durcissement de l'adhésif (8) au moyen de l'élément de perçage par écoulement (10).

4. Procédé selon l'une des revendications précédentes,
**caractérisé en ce que**
le composant (7) utilisé est un cadre en aluminium qui est collé au composant en acier (2) par chevauchement avec l'élément d'enfoncement (5).

5. Procédé selon l'une des revendications précédentes,
**caractérisé en ce que**
le point de rupture (3) est réalisé par une perforation ménagée dans le composant en acier (2).

6. Procédé selon l'une des revendications 1 à 4,
**caractérisé en ce que**
le point de rupture (3) est réalisé par un rétrécissement de matière local (4) du composant en acier (2) au moyen d'un élément de moulage.

7. Composite de composant en acier (1), comprenant un composant en acier (2), qui comporte une ouverture (6) ménagée par un élément d'enfoncement (5) par perforation d'un point de rupture (3), l'élément d'enfoncement (5) qui est enfoncé dans l'ouverture (6) du composant en acier (2), un composant (7) qui est fixé au composant en acier (2) au moyen d'un adhésif (8) au moins pour un chevauchement avec l'élément d'enfoncement (5),
le composite de composant en acier (1) comportant un trou d'écoulement (9) qui s'étend à travers l'élément d'enfoncement (5), le composant en acier (2) et le composant (7) par chevauchement.

8. Composant en acier composite (1) selon la revendication 7,
**caractérisé en ce que**
une vis de trou d'écoulement (10) est disposée dans le trou d'écoulement (9), laquelle permet de réaliser le trou d'écoulement (9).
